# FASCICULE DE BREVET EUROPEEN

(11) **EP 0 941 414 B1**
(45) Date de publication et mention de la délivrance du brevet: **12.07.2000**
(21) Numéro de dépôt: 97950225.9
(22) Date de dépôt: 04.12.1997
(51) Int. Cl.: F16C 19/16, F16C 35/063

(54) **PALIER A ROULEMENT DE COLONNE DE DIRECTION POUR VEHICULES AUTOMOBILES**
WÄLZLAGER FÜR KRAFTFAHRZEUGLENKSÄULEN
ROLLING BEARING OF STEERING COLUMN FOR MOTOR VEHICLES

(30) Priorité: 09.12.1996 FR 9615106; 29.04.1997 FR 9705259
(43) Date de publication de la demande: 15.09.1999
(73) Titulaire: SKF FRANCE, F-92142 Clamart Cédex (FR)
(72) Inventeur: PONSON, Frédéric, F-37230 Luynes (FR); POULLE, Thiery, F-37370 Neuvy-le-Roi (FR); ARNAULT, Benoît, F-37100 Tours (FR); COLLIGNON, Bertrand, F-37540 Saint-Cyr-sur-Loire (FR); HOUDAYER, Christophe, F-37000 Tours (FR); ZINGARIELLO, Filippo, F-37230 Luynes (FR)
(74) Mandataire: Casalonga, Axel
(86) Numéro de dépôt international: FR9702207
(87) Numéro de publication internationale: WO9826189

(56) Documents cités:
- DE-A- 2 507 900
- DE-A- 3 808 556

## Description

La présente invention relève du domaine des paliers à roulement, notamment pour colonnes de direction de véhicules automobiles.

Les colonnes de direction comprennent généralement un arbre dont une extrémité est solidaire d'un volant d'entraînement actionné par le conducteur du véhicule et dont l'autre extrémité est solidaire d'organes mécaniques destinés à assurer le positionnement angulaire des roues du véhicule. L'arbre de la colonne de direction est monté dans un logement de forme tubulaire fixe par l'intermédiaire de deux paliers à roulement, généralement à billes à contact oblique, montés en opposition.

Les bagues extérieures des paliers à roulement sont solidarisées avec le logement de la colonne de direction et les bagues intérieures sont montées sur l'arbre de colonne par l'intermédiaire d'une bague dite de tolérance.

L'ensemble fonctionne à jeu nul grâce à un effort axial de précontrainte exercé sur les bagues de tolérance par un organe élastique axialement qui peut être, par exemple, un ressort, une rondelle élastique, etc.

Généralement, l'effort axial de précontrainte est exercé sur la bague de tolérance d'un seul des deux paliers à roulement, la bague de tolérance du deuxième palier à roulement étant immobilisée axialement dans la direction de cet effort. La bague de tolérance du premier palier à roulement pouvant coulisser axialement sur l'arbre, l'effort axial exercé par l'organe élastique axialement tend à rapprocher axialement l'une de l'autre les bagues intérieures des deux paliers à roulement.

On rattrape ainsi les jeux internes des roulements et on assure le contact permanent sans jeu et sous précharge entre les bagues et les éléments roulants du palier à roulement.

Par le document US-A-5 193 917 (INA), on connaît un palier à roulement pour colonne de direction, sur lequel l'organe élastique axialement est constitué par une pièce en matière plastique qui peut être réalisée d'une seule pièce avec la bague de tolérance. Les principaux inconvénients de ce palier à roulement résident dans la forme relativement complexe de cette pièce en matière plastique, et dans la difficulté de garantir dans le temps la maîtrise de l'effort de précontrainte, compte tenu du vieillissement de la matière plastique.

D'autres paliers à roulement connus pour colonnes de direction comprennent une pièce supplémentaire en forme de rondelle frein pour positionner la bague de tolérance sur l'arbre de la colonne de direction.

Ces paliers à roulement comprennent donc généralement une bague extérieure solidaire du logement, une bague intérieure en contact avec l'arbre, une rangée d'éléments roulants disposés entre les deux bagues et en contact avec celles-ci, une bague de tolérance, généralement en polyamide, qui assure la liaison entre la bague intérieure et l'arbre de la colonne de direction et est capable de transmettre des efforts axiaux à la bague intérieure pour maintenir le palier à roulement en précontrainte interne permanente, et une rondelle frein servant à fermer l'ensemble du palier à roulement et à le bloquer axialement sur l'arbre tout en maintenant une précharge axiale sur la bague de tolérance afin d'obtenir un fonctionnement sans jeu du palier à roulement.

De façon conventionnelle, les différentes pièces d'un tel palier à roulement ne sont réunies que lors de leur montage dans le dispositif de colonne de direction. Il existe donc un risque de perte d'éléments lors des manipulations et du montage de l'ensemble dans le dispositif de colonne de direction. De plus, plusieurs stocks de pièces différentes doivent être gérés.

Pour ces différentes raisons, on cherche à constituer un ensemble indémontable comprenant les bagues, les éléments roulants, la bague de tolérance et la rondelle frein de façon à pouvoir assembler ledit ensemble avant son montage dans le dispositif de colonne de direction et ainsi de livrer des paliers à roulement prêts à être montés sans risque de perte de pièces.

On connaît par le document DE-A 38 08 556 (FAG) un palier à roulement de colonne de direction dont la bague de tolérance en matériau synthétique comprend une portion disposée radialement entre la bague intérieure et l'arbre, et se prolongeant axialement d'un côté, en direction d'une extrémité cylindrique de la bague extérieure, ce prolongement axial étant pourvu de protubérances radiales destinées à assurer la retenue axiale de la bague extérieure. La bague de tolérance comprend également une portion cylindrique disposée axialement du côté opposée à la portion précitée, et radialement entre la bague extérieure et un système de rondelle frein, l'extrémité libre de cette portion cylindrique étant également pourvue de protubérances radiales assurant la retenue axiale de la rondelle frein. Toutefois, un tel type de bague de tolérance déborde radialement vers l'intérieur par rapport à l'alésage de la bague intérieure ce qui accroît l'encombrement radial du palier à roulement, et axialement au-delà de l'extrémité radiale de la bague extérieure ce qui accroît l'encombrement axial du palier à roulement.

La présente invention a pour objet de remédier à ces inconvénients et d'utiliser une bague de tolérance de forme simple.

L'invention a également pour objet de proposer un palier à roulement formant un ensemble indémontable très compact qui peut être monté en une seule opération dans le dispositif de colonne de direction.

L'invention a par ailleurs pour objet de proposer un palier à roulement formant un ensemble indémontable compact intégrant des moyens élastiques axialement pour exercer un effort axial de précontrainte permettant un fonctionnement sans jeu de l'ensemble comprenant les deux paliers à roulement montés de part et d'autre du logement d'une colonne de direction.

Le palier à roulement selon l'invention est notamment destiné à une colonne de direction de véhicule automobile, et est du type comprenant une bague extérieure pourvue d'un chemin de roulement, une bague intérieure pourvue d'un chemin de roulement, une rangée d'éléments roulants disposés entre les chemins de roulement desdites bagues, une bague de tolérance assurant la liaison de la bague intérieure avec l'arbre de la colonne de direction et capable de transmettre des efforts axiaux à la bague intérieure, et une rondelle frein pour bloquer le palier axialement sur l'arbre. La bague extérieure comprend un moyen de retenue axiale de la rondelle frein.

Ainsi, au moins à l'état monté du palier sur l'arbre, la bague de tolérance peut ne pas faire saillie ni vers l'intérieur par rapport à l'alésage de la bague intérieure ni axialement au-delà de la bague extérieure. Dans ce cas, les dimensions des deux bagues définissent essentiellement l'encombrement du palier à roulement.

Dans un mode de réalisation de l'invention, la bague extérieure comprend une portion cylindrique entourant la bague de tolérance et la rondelle frein, et pourvue d'une déformation radiale, ladite déformation radiale étant capable de coopérer avec la périphérie de la rondelle frein, assurent ainsi sa retenue axiale. La déformation radiale peut être disposée à l'extrémité libre de la bague extérieure et peut former un rétreint. L'obtention d'un tel rétreint est très simple et économique.

Dans un mode de réalisation de l'invention, la déformation radiale comprend une pluralité de bossages en saillie vers l'intérieur par rapport à l'alésage de la portion cylindrique de la bague extérieure.

Dans un autre mode de réalisation de l'invention, la déformation radiale comprend un bourrelet annulaire en saillie vers l'intérieur par rapport à l'alésage de la portion cylindrique de la bague extérieure.

Dans un autre mode de réalisation, la déformation comprend une pluralité de languettes faisant saillie par rapport à l'alésage de la portion cylindrique de la bague extérieure.

Dans un autre mode de réalisation de l'invention, la déformation comprend une rainure annulaire prévue dans l'alésage de la portion cylindrique de la bague extérieure.

Dans un mode de réalisation de l'invention, la rondelle frein comprend une portion cylindrique disposée radialement entre la bague de tolérance et le moyen de retenue de la bague extérieure, ladite portion cylindrique étant prolongée à son extrémité libre par une collerette radiale orientée vers l'extérieur et capable de coopérer avec le moyen de retenue.

Dans un autre mode de réalisation de l'invention la rondelle frein est sensiblement radiale à proximité de cette périphérie.

La rondelle frein peut être découpée en languettes sur sa périphérie.

Pour intégrer au palier à roulement également les moyens permettant d'exercer un effort axial de précontrainte, une rondelle élastique axialement peut être intercalée axialement entre la bague de tolérance et la rondelle frein.

Suivant une variante, la rondelle frein est conformée avec des moyens à élasticité axiale de manière à exercer elle-même un effort axial de précontrainte sur la bague de tolérance.

Dans ce cas, la rondelle frein peut de préférence comporter une portion radiale dans laquelle sont prévues des languettes élastiques flexibles, faisant saillie axialement de ladite portion radiale en direction de la bague de tolérance.

Lesdites languettes élastiques peuvent de préférence être orientées dans le sens circonférentiel.

Grâce à l'invention, on obtient un palier à roulement dont la bague de tolérance est de forme simple, dont les dimensions hors tout sont faibles et qui peut être assemblé de façon indémontable avant la livraison à un client qui procédera à son montage dans une colonne de direction.

L'invention sera mieux comprise à l'étude de la description détaillée de quelques modes de réalisation pris à titre d'exemples nullement limitatifs et illustrés par les dessins annexés, sur lesquels :
la figure 1 est une vue en coupe axiale d'un palier à roulement selon un premier mode de réalisation de l'invention;
la figure 2 est une demi-vue en coupe axiale d'un palier à roulement selon un seconde mode de réalisation de l'invention;
la figure 3 est une vue semblable à la figure 2 montrant un palier à roulement selon un troisième mode de réalisation de l'invention;
la figure 4 est une vue sembable à la figure 2 montrant un palier à roulement selon un quatrième mode de réalisation de l'invention;
la figure 5 est une vue semblable à la figure 2 montrant un palier à roulement selon un cinquième mode de réalisation de l'invention ;
la figure 6 est une vue semblable à la figure 2 montrant un palier à roulement selon un sixième mode de réalisation de l'invention; et
la figure 7 est une vue semblable à la figure 1 montrant le montage d'un palier à roulement dans sa position définitive;
la figure 8 est une vue en coupe axiale d'un mode de réalisation d'un palier à roulement à rondelle élastique intégrée;
la figure 9 est une vue en coupe axiale du palier à roulement selon la figure 8 en position montée, avec écrasement complet de la rondelle élastique;
la figure 10 est une vue en coupe axiale d'un mode de réalisation d'un palier à roulement comportant une rondelle frein à languettes à élasticité axiale;
la figure 11 est une vue en coupe du palier à roulement selon la figure 10 en position montée, avec fléchissement complet des languettes élastiques de la rondelle frein;
la figure 12 est une vue axiale de la rondelle frein utilisée dans le roulement des figures 10 et 11; et
les figures 13 et 14 sont des coupes partielles, à plus grande échelle, selon XIII-XIII et XIV-XIV de la figure 12.

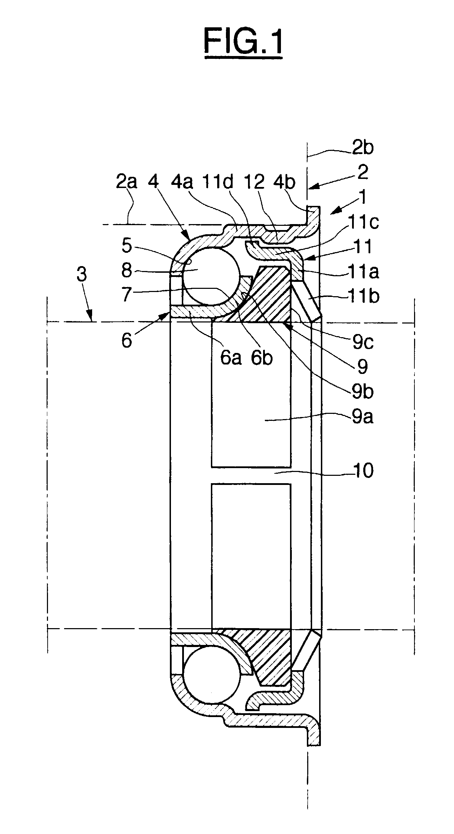

Comme on peut le voir sur la figure 1, le palier à roulement 1 est disposé entre un logement fixe 2 représenté en traits mixtes et comprenant un alésage 2a et une surface frontale 2b, et un arbre tournant 3 également représenté en traits mixtes.

Le palier à roulement 1 comprend une bague extérieure 4 en tôle emboutie, définissant un chemin de roulement 5, une bague intérieure 6, en tôle emboutie, définissant un chemin de roulement 7, et une rangée d'éléments roulants 8, par exemple des billes, disposés entre le chemin de roulement intérieur 5 de la bague extérieure 4 et le chemin de roulement extérieur 7 de la bague intérieure 6.

La bague extérieure 4 comprend une portion cylindrique 4a s'étendant à partir de la rangée d'éléments roulants 8 en direction de la surface frontale 2b du logement 2, et une collerette radiale 4b s'étendant à partir de l'extrémité libre de la portion cylindrique 4a, vers l'extérieur. La portion cylindrique 4a est en contact avec l'alésage 2a du logement 2 et la collerette radiale 4b est en contact avec la surface frontale 2b du logement 2 et sert de butée de positionnement axial. La bague intérieure 6 comprend une portion cylindrique 6a emmanchée sur l'arbre 3 avec un certain jeu radial et une portion toroïdale 6b dont la surface externe forme le chemin 7.

Le palier à roulement 1 comprend une bague de tolérance élastique 9 réalisée en matériau synthétique, par exemple en polyamide, et formant un anneau interrompu par une fente radiale 10. La fente radiale 10 permet à la bague de tolérance 9 de s'adapter aux variations dimensionnelles diamétrales de l'arbre 3 et de la bague intérieure 6, dues aux tolérances de fabrication et d'assurer ainsi par élasticité la liaison entre la bague intérieure 6 et l'arbre 3. La bague de tolérance 9 permet en outre de compenser les défauts de coaxialité du logement par rapport à l'arbre. La bague de tolérance 9 comprend un alésage 9a en contact avec l'arbre 3, une portion de surface toroïdale 9b de forme correspondante à la portion toroïdale 6b de la bague intérieure 6 et en contact avec celle-ci, et à l'opposé de la surface toroïdale 9b, une surface radiale 9c.

Le palier à roulement 1 comprend également une rondelle frein 11 comprenant une portion radiale 11a en contact avec la surface radiale 9c de la bague de tolérance, une collerette oblique 11b s'étendant à partir de la portion radiale 11a radialement vers l'intérieur et axialement à l'opposé de la bague de tolérance 9, une portion cylindrique 11c s'étendant à partir de la périphérie de la portion radiale 11a et disposée radialement entre la portion cylindrique 4a de la bague extérieure 4 et la bague de tolérance 9, et une collerette radiale 11d, continue et s'étendant à partir de l'extrémité libre de la portion cylindrique 11c en direction de la portion cylindrique 4a de la bague extérieure 4.

La collerette oblique 11b qui peut être découpée en languettes serre sur l'arbre 3 ce qui permet de déplacer la rondelle frein 11 en direction des éléments roulants 8 en glissant sur l'arbre 3 mais empêche un mouvement axial inverse par arc-boutement de la collerette radiale 11b sur l'arbre 3. On peut donc, lors du montage, disposer la rondelle frein 11 dans une position axiale déterminée sur l'arbre 3 pour appliquer une précontrainte axiale à la bague intérieure 6 par l'intermédiaire de la bague de tolérance 9. La surface toroïdale 9b de la bague de tolérance 9 en contact avec la bague intérieure 6 provoque un effet de coin entre l'arbre 3 et la portion toroïdale 6b de la bague intérieure 6 ce qui assure une liaison satisfaisante entre l'arbre 3 et la bague intérieure 6 et empêche d'autre part tout déplacement radial intempestif de la bague de tolérance 9 tant que le palier à roulement n'est pas monté sur l'arbre.

La portion cylindrique 4a de la bague extérieure 4 est pourvue d'une pluralité de bossages 12 en saillie radialement vers l'intérieur par rapport à l'alésage de ladite portion cylindrique et disposés axialement au niveau de la portion cylindrique 11c de la rondelle frein 11. Les bossages 12 définissent un diamètre inférieur à celui de la collerette radiale 11d de la rondelle frein 11. Ainsi, avant le montage du palier à roulement 1 dans son logement 2 et autour de l'arbre 3, la rondelle frein 11 ne peut se séparer des autres éléments du palier à roulement 1 grâce à la retenue exercée par les bossages 12.

On procède à l'assemblage du palier à roulement 1 de la façon suivante : on dispose la rangée d'éléments roulants 8 sur le chemin 5 de la bague extérieure 4, on amène la bague intérieure 7 en contact avec les éléments roulants 8, on amène la bague de tolérance 9 en contact avec la bague intérieure 6 puis on introduit axialement à force la rondelle frein il dans la bague extérieure 4 de façon à ce que par élasticité, la collerette radiale 11d de la rondelle frein 11 puisse franchir les bossages 12 et se retrouver axialement entre lesdits bossages et la rangée de billes.

L'interférence entre le diamètre de la collerette radiale 11d et le diamètre défini par les bossages est calculée pour que l'encliquetage axial de la rondelle frein 11 dans la bague extérieure 4 soit possible tout en garantissant ultérieurement une indémontabilité suffisante. Afin de faciliter le montage et de réduire, voire annuler, l'interférence durant l'opération, il est possible d'incliner la rondelle frein 11 par rapport à la bague extérieure 4.

Bien entendu, à titre de variante, et plus particulièrement si on souhaite encore renforcer l'indémontabilité de la la rondelle frein 11 par rapport à la bague extérieure 4, il est possible de former les bossages après avoir mis en place la rondelle frein dans la bague extérieure.

On peut alors augmenter de façon notable l'interférence entre les bossages et la périphérie de la rondelle frein. On dispose alors d'un palier à roulement 1 formant un ensemble indémontable qui peut être facilement manipulé.

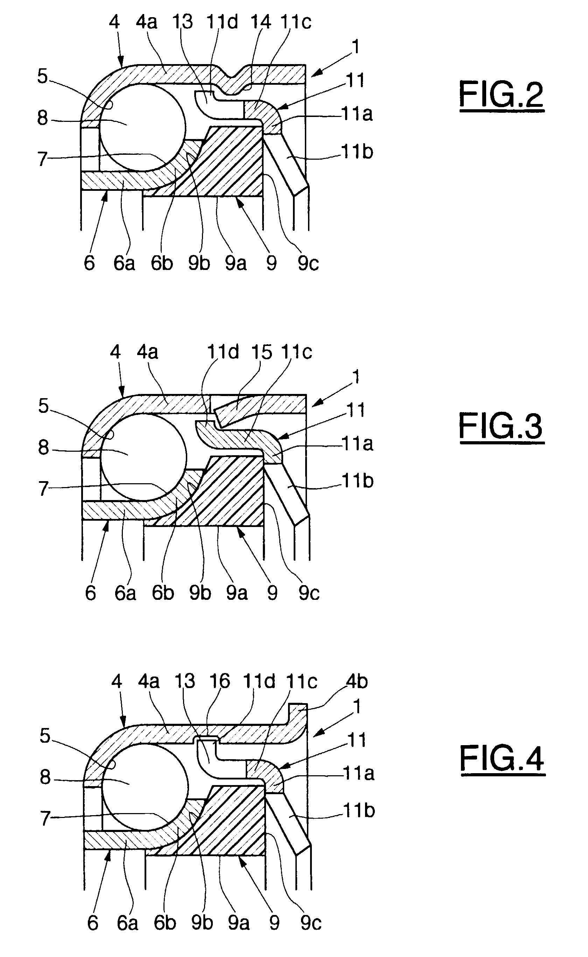

Le mode de réalisation illustré sur la figure 2 est semblable à celui de la figure 1 à ceci près que la collerette radiale 11d et, au moins partiellement, la portion cylindrique 11c de la rondelle frein 11 sont découpées en languettes 13. La bague extérieure 4, dépourvue de bossage et de collerette radiale, est pourvue d'un bourrelet interne 14 continu obtenu par roulage avec une molette sur la surface extérieure de la portion cylindrique 4a. Le bourrelet interne 14 est formé sensiblement au même endroit que les bossages du mode de réalisation précédent et est radialement en saillie vers l'intérieur par rapport à l'alésage de la portion cylindrique. Comme la rondelle frein 11 comprend les languettes 13, on peut former le bourrelet 14 préalablement au montage du palier à roulement 1 et venir monter la rondelle frein 11 en dernier lieu, les languettes 13 étant capables de s'effacer vers l'intérieur lors du franchissement du bourrelet interne 14. La fabrication de la bague extérieure 4 et le montage du palier à roulement 1 sont ainsi très simples et économiques.

Le mode de réalisation illustré sur la figure 3 est semblable à celui de la figure 1 à ceci près que la bague extérieure 4, dépourvue de bossage et de collerette radiale, comprend une pluralité de languettes 15 formées à partir de la portion cylindrique 4 et radialement en saillie vers l'intérieur par rapport à l'alésage de ladite partie cylindrique. Les languettes 15 sont prévues dans le sens axial, leurs extrémités libres étant dirigées vers la collerette radiale 11d de la rondelle frein 11 de façon que la rondelle frein 11 puisse venir s'encliqueter dans la bague extérieure 4. Les languettes 15 s'effacent radialement vers l'extérieur sous l'action de la collerette radiale 11d lors du montage de la rondelle frein 11 et empêchent ensuite un démontage éventuel de la rondelle frein 11, l'extrémité libre des languettes 15 définissant un diamètre inférieur à celui de la collerette radiale 11d. On peut ainsi former les languettes 15 dès la fabrication de la bague extérieure 4, monter l'ensemble des pièces du palier à roulement 1 et monter en dernier la rondelle frein 11 grâce à l'élasticité radiale des languettes 15 et à la retenue axiale qu'elles exercent sur la rondelle frein 11 après le montage.

Le mode de réalisation illustré sur la figure 4 est semblable à celui de la figure 2 à ceci près que la bague extérieure 4, dépourvue de bourrelet interne, comprend une rainure circulaire interne 16 dans laquelle les languettes 13 de la rondelle frein 11 font saillie après le montage. La rainure circulaire 16 peut être obtenue par usinage avec enlèvement de copeaux ou, de préférence, par estampage à plat d'un flan de tôle destiné à former, après emboutissage, la bague extérieure 4. Lors du montage du palier à roulement 1, on amène en dernier la rondelle frein 11 par un mouvement axial. Les languettes 13 qui sont de diamètre supérieur à l'alésage de la portion cylindrique 4a de la bague extérieure 4, s'effacent radialement vers l'intérieur lors du passage sur ledit alésage et reprennent leur forme initiale dans la rainure circulaire 16.

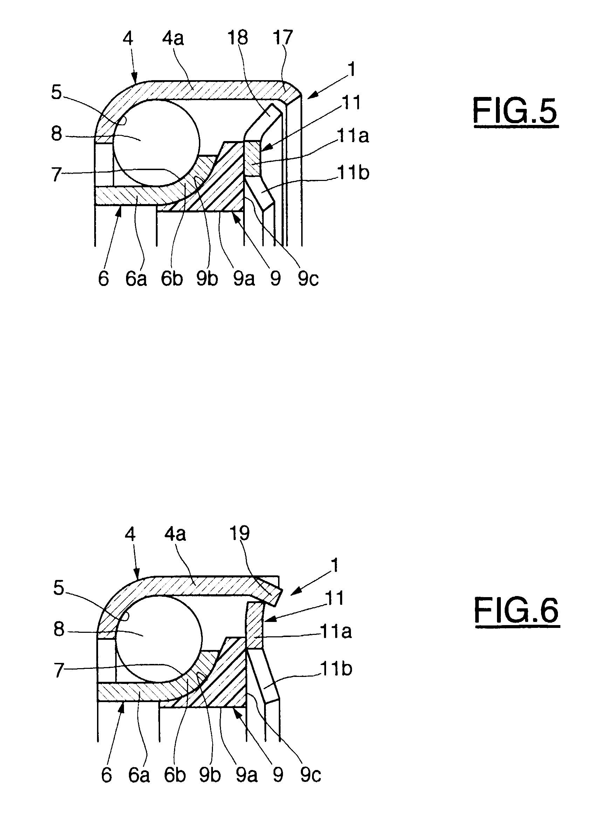

Le mode de réalisation illustré sur la figure 5 est semblable à celui de la figure 1, à ceci près que la bague extérieure 4 dépourvue de bossage et de collerette radiale, comprend un rétreint oblique 17 disposé à l'extrémité libre de la portion cylindrique 4a. Le rétreint 17 est formé de façon continue autour de la bague extérieure 4 lors des opérations d'emboutissage destinées à former la bague extérieure 4. La rondelle frein 11 comprend à partir de la périphérie de sa portion radiale 11a, un rangée de languettes 18 obliques s'étendant radialement vers l'extérieur et inclinées dans la direction opposée aux éléments roulants 8. La rondelle frein 11 vient s'encliqueter avec le rétreint 17 grâce aux languettes 18 capables de s'effacer lors du passage du rétreint 17 et de reprendre leur forme initiale ultérieurement empêchant ainsi tout démontage de la rondelle frein 11 et plus généralement du palier à roulement 1 qui est particulièrement compact.

Le mode de réalisation de la figure 6 est semblable à celui de la figure 5 à ceci près que la bague extérieure 4 comprend à la place du rétreint 17 plusieurs déformations locales 19 obtenues par une opération de poinçonnage effectuée après le montage de la rondelle frein 11. La rondelle frein 11 dépourvue de languettes, comprend une portion radiale 11a qui s'étend radialement à proximité de l'alésage de la portion cylindrique 4a de la bague extérieure 4 de façon que le diamètre défini par les déformations locales 19 soit inférieur au diamètre de la périphérie de la rondelle frein 11. On monte d'abord l'ensemble des pièces constituant le palier à roulement 1 puis on déforme localement en plusieurs endroits l'extrémité libre de la portion cylindrique 4a de la bague extérieure 4. Un tel palier à roulement est extrêmement compact axialement.

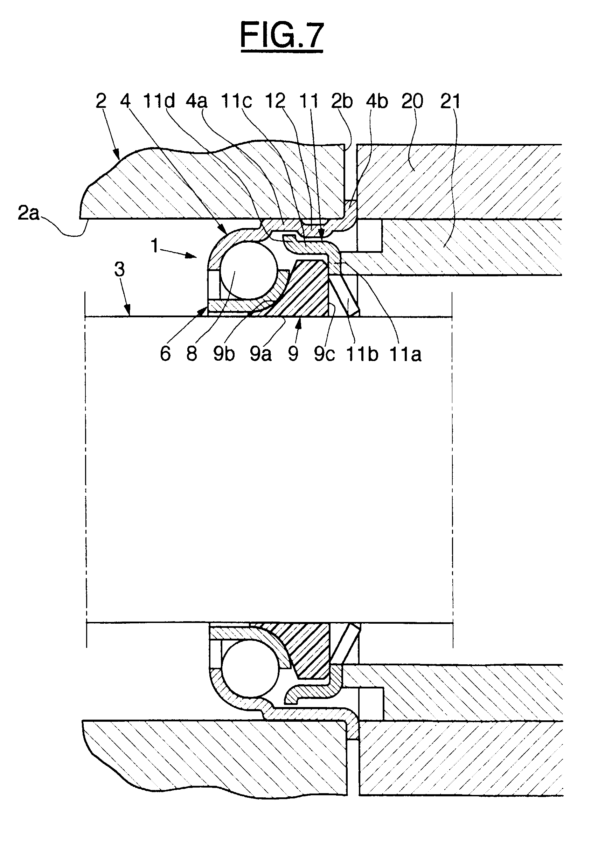

La figure 7 illustre une étape de l'installation du palier à roulement 1 en position définitive entre l'arbre 3 et le logement 2. L'installation est effectuée au moyen d'un outil comprenant un fourreau extérieur 20 et un fourreau intérieur 21 concentriques, le fourreau extérieur 20 étant capable d'entrer en contact avec la collerette radiale 4b de la bague extérieure 4 et le fourreau intérieur 21 étant capable d'entrer en contact avec la portion radiale 11a de la rondelle frein 11. On déplace tout d'abord les deux fourreaux 20 et 21 de façon simultanée, le fourreau extérieur 20 provoquant l'emmanchement de la portion cylindrique 4a de la bague extérieure 4 dans l'alésage 2a du logement 2. Ce mouvement d'emmanchement est limité par la collerette radiale 4b entrant en contact avec la surface frontale 2b du logement 2. Puis on déplace axialement le fourreau intérieur 21 en direction des éléments roulants 8 pour parfaire la liaison entre la bague intérieure 6 et l'arbre 3 et pour mettre le palier à roulement 1 en précontrainte. Les fourreaux 20 et 21 sont ensuite retirés.

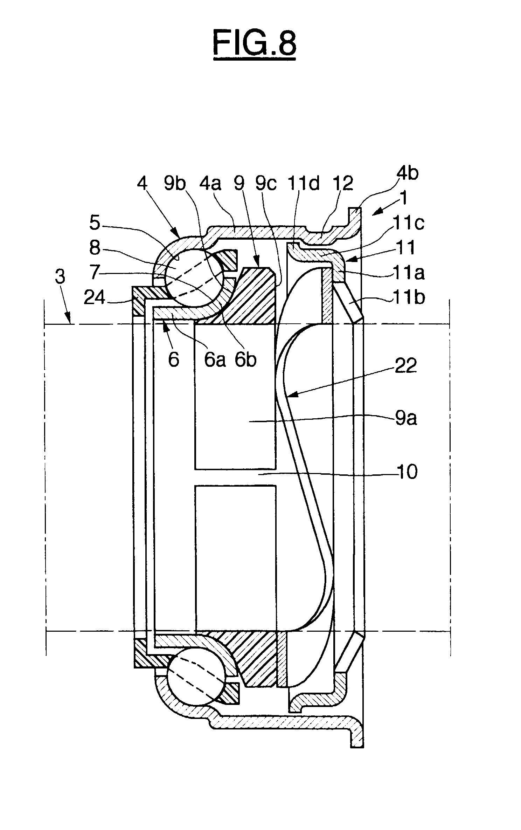

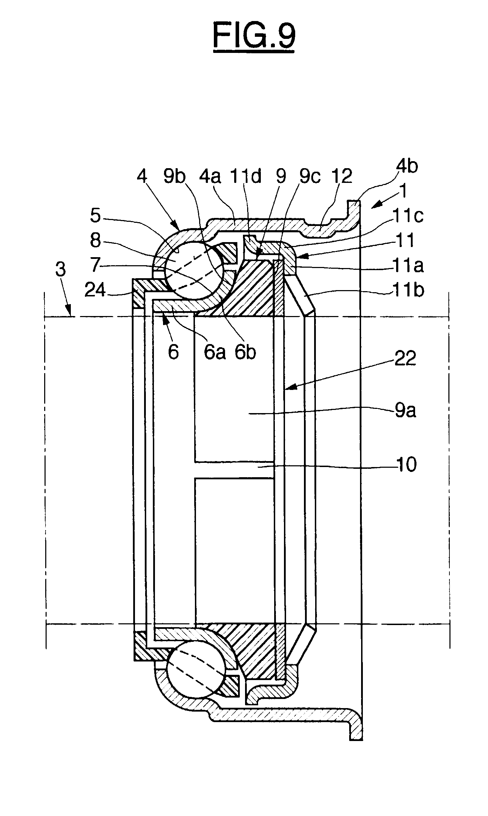

Les figures 8 et 9 montrent un palier à roulement qui correspond essentiellement au palier à roulement suivant la figure 1, mais qui intègre en plus une rondelle 22 élastique axialement, réalisée ici sous la forme d'une rondelle ondulée. Cette rondelle élastique 22 est intercalée axialement entre la bague de tolérance 9 et la rondelle frein 11, en portant contre la surface radiale 9c de la bague 9 et la portion radiale 1 la de la rondelle frein 11.

La bague intérieure 6, la bague de tolérance 9 et la rondelle frein 11 sont identiques à celles utilisées dans le mode de réalisation suivant la figure 1, et la bague extérieure 4 ne différe de la bague 4 suivant la figure 1 que par la longueur axiale accrue de la portion cylindrique 4a.

Une comparaison des figures 8 et 9 permet de remarquer la grande course élastique que la rondelle élastique 22 permet entre la position de recul maximale de la rondelle frein 11, définie par l'appui de la collerette radiale 11d de la rondelle frein 11 contre les bossages 12 de la bague extérieure 4, et la position d'avance maximale suivant la figure 9, dans laquelle la portion radiale 11a de la rondelle frein 11 appuie la rondelle élastique 22 aplatie, complètement écrasée, contre la surface radiale 9c de la bague de tolérance 9.

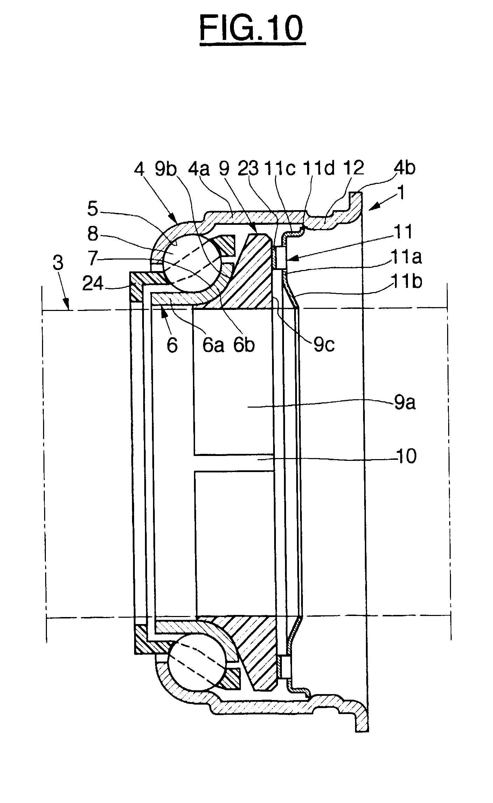

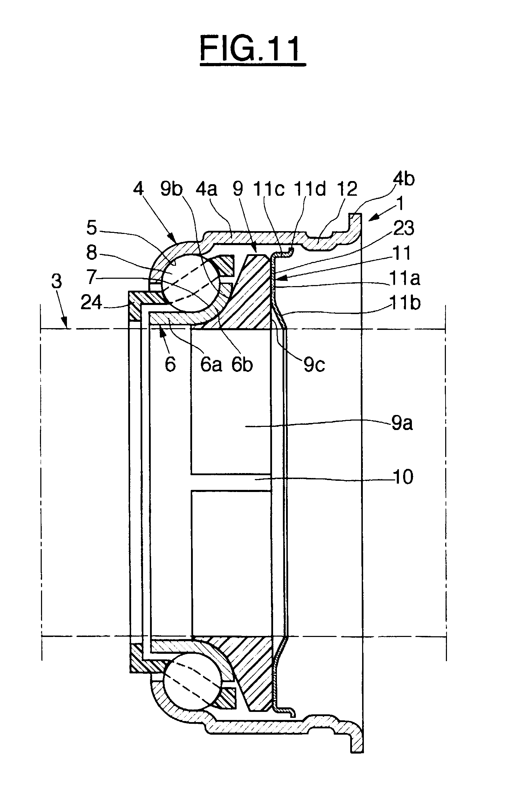

Dans le palier à roulement suivant les figures 10 et 11, les moyens assurant, par un effet d'élasticité axiale, un effort axial de précontrainte, sont intégrés à la rondelle frein 11, les autres parties du palier à roulement (bague intérieure 6, bague extérieure 4, bague de tolérance 9) étant identiques au mode de réalisation des figures 8 et 9.

La rondelle frein 11 présente essentiellement le même profil que la rondelle frein 11 suivant la figure 1, sauf que la portion cylindrique 11c s'étend, à partir de la périphérie de la portion radiale 11a, en direction de l'extrémité libre de la bague extérieure 4.

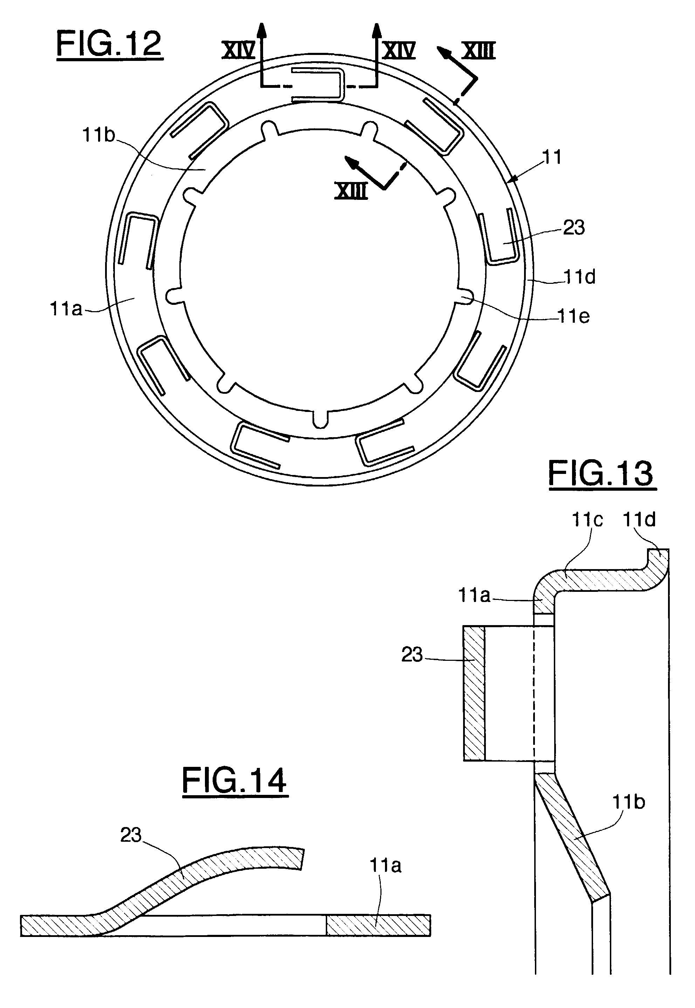

L'effet d'élasticité axiale de la rondelle frein 11 est obtenu par le fait que cette dernière comporte, dans sa portion radiale 11a, une couronne de languettes élastiques 23 découpées sous forme de crevées circonférentielles et toutes cambrées axialement dans le même sens, en direction de la bague de tolérance 9, de manière à constituer des languettes circonférentielles flexibles axialement. De préférence, comme le montre la figure 14, les languettes 23 sont cambrées de façon à présenter une surface convexe de contact avec la surface radiale 9c de la bague de tolérance 9.

Tel que cela apparaît en particulier sur la figure 12, la collerette intérieure oblique 11b de la rondelle frein 11 est subdivisée par des encoches 11e en une pluralité de segments d'accrochage.

Bien entendu, les modes de réalisation précédents ne sont nullement limitatifs et on comprendra que dans la réalisation suivant les figures 2 et 5 par exemple, il serait possible d'utiliser une rondelle frein 11 dont la périphérie ne comporte pas de languettes 13, 18, mais est continue, la déformation radiale de la bague extérieure sous forme de bourrelet 14 ou de rétreint 17 étant effectuée après la mise en place de la rondelle frein 11 dans la bague extérieure 4.

La cage 24 prévue dans les modes de réalisation suivant les figures 8 à 14 pour maintenir à distance régulière les uns des autres les éléments roulants 8, pourrait également être utilisée dans les autres modes de réalisation.

Pour réduire la longueur axiale du palier à roulement suivant les figures 10 à 14, il serait possible de donner à la rondelle frein 11 le même profil que sur la figure 1, et de raccourcir en conséquence la portion cylindrique 4a de la bague extérieure 4.

La bague de tolérance 9, dans le cadre de l'invention, pourrait également comporter une partie s'engageant en dessous de la bague intérieure 6 de manière à s'intercaler radialement entre cette bague 6 et l'arbre 3. Par ailleurs, cette bague de tolérance pourrait avoir un alésage inférieure à celui de la bague intérieure 6.

Par ailleurs, la rondelle ondulée 22 suivant les figures 8 et 9 pourrait être remplacée par une rondelle différente, par exemple une rondelle conique, une rondelle à languettes élastiques. Il serait également possible, dans le cadre de l'invention, de remplacer les languettes circonférentielles 23 de la rondelle frein 11 suivant les figures 10 à 14 par des languettes par exemple radiales ou par d'autres moyens faisant partie intégrante de la rondelle frein 11 et permettant d'exercer, par effet d'élasticité, un effort axial de précontrainte.

Dans tous les cas, grâce à l'invention, on obtient un palier à roulement compact axialement et radialement et qui peut être manipulé par un opérateur avant son installation définitive sans risque de perdre des pièces.

## Revendications

1. Palier à roulement (1), notamment pour colonne de direction de véhicules automobiles, du type comprenant une bague extérieure (4) pourvue d'un chemin de roulement, une bague intérieure (6) pourvue d'un chemin de roulement, une rangée d'éléments roulants (8) disposés entre les chemins de roulement desdites bagues, une bague de tolérance (9) assurant la liaison de la bague intérieure avec l'arbre de la colonne de direction et capable de transmettre des efforts axiaux à la bague intérieure et une rondelle frein (11) pour bloquer le palier axialement sur l'arbre, caractérisé par le fait que la bague extérieure comprend un moyen de retenue axiale de la rondelle frein.

2. Palier selon la revendication 1, caractérisé par le fait que la bague extérieure comprend une portion cylindrique entourant la bague de tolérance et la rondelle frein, et pourvue d'une déformation radiale, ladite déformation radiale étant capable de coopérer avec la périphérie de la rondelle frein.

3. Palier selon la revendication 2, caractérisé par le fait que la déformation radiale est disposée à l'extrémité libre de la bague extérieure.

4. Palier selon la revendication 2 ou 3, caractérisé par le fait que la déformation radiale comprend une pluralité de bossages (12) en saillie vers l'intérieur par rapport à l'alésage de la portion cylindrique de la bague extérieure.

5. Palier selon la revendication 2 ou 3, caractérisé par le fait que la déformation radiale comprend un bourrelet annulaire (14) en saillie vers l'intérieur par rapport à l'alésage de la portion cylindrique de la bague extérieure pour former un rétreint.

6. Palier selon la revendication 2 ou 3, caractérisé par le fait que la déformation radiale comprend une pluralité de languettes (13) en saillie vers l'intérieur par rapport à l'alésage de la portion cylindrique de la bague extérieure.

7. Palier selon la revendication 2, caractérisé par le fait que la déformation radiale comprend une rainure annulaire (16) prévue sur l'alésage de la portion cylindrique de la bague extérieure.

8. Palier selon l'une quelconque des revendications précédentes, caractérisé par le fait que la rondelle frein comprend une portion cylindrique disposée radialement entre l'organe élastique et le moyen de retenue de la bague extérieure, ladite portion cylindrique étant prolongée à son extrémité libre par une collerette radiale (11d) orientée vers l'extérieur et capable de coopérer avec ledit moyen de retenue axiale.

9. Palier selon l'une quelconque des revendications 1 à 7, caractérisé par le fait que la rondelle frein est sensiblement radiale à proximité de sa périphérie.

10. Palier selon l'une quelconque des revendications précédentes, caractérisé par le fait que la périphérie de la rondelle frein est découpée en languettes (13).

11. Palier selon l'une quelconque des revendications précécentes, caractérisé par le fait qu'une rondelle (22) élastique axialement est intercalée axialement entre la bague de tolérance (9) et la rondelle frein (11) pour exercer un effort axial de précontrainte sur la bague de tolérance.

12. Palier selon l'une quelconque des revendications 1 à 10, caractérisé par le fait que la rondelle frein (11) est conformée avec des moyens à élasticité axiale de manière à exercer elle-même un effort axial de précontrainte sur la bague de tolérance (9).

13. Palier selon la revendication 12, caractérisé par le fait que la rondelle frein (11) comprend une portion radiale (11a) dans laquelle sont prévues des languettes élastiques (23) flexibles, faisant saillie axialement de ladite portion radiale en direction de la bague de tolérance.

14. Palier selon la revendication 13, caractérisé par le fait que les languettes élastiques (23) sont orientées dans le sens circonférentiel.

## Patentansprüche

1. Wälzlager (1) insbesondere für die Lenksäule von Kraftfahrzeugen, mit einem eine Laufbahn aufweisenden Außenring (4), einem eine Laufbahn aufweisenden Innenring (6), mit einer Reihe von Wälzkörpern (8), die zwischen den Laufbahnen der Ringe angeordnet sind, mit einem Ausgleichsring (9), der die Verbindung des Innenrings mit der Lenkspindel der Lenksäule sicherstellt und in der Lage ist axiale Kräfte auf den Innenring zu übertragen und mit einer Sicherungsscheibe (11), um das Lager in axialer Richtung auf der Lenkspindel festzusetzen, dadurch gekennzeichnet, dass der Außenring ein axiales Sicherungsmittel für die Sicherungsscheibe aufweist.

2. Lager nach Anspruch 1, dadurch gekennzeichnet, dass der Außenring einen zylindrischen Abschnitt aufweist, der den Ausgleichsring und die Sicherungsscheibe umgibt und der mit einer radialen Gestaltsänderung versehen ist, wobei die radiale Gestaltsänderung in der Lage ist, mit dem Rand der Sicherungsscheibe zusammenzuwirken.

3. Lager nach Anspruch 2, dadurch gekennzeichnet, dass die radiale Gestaltsänderung an dem freien Ende des Außenrings angeordnet ist.

4. Lager nach Anspruch 2 oder 3, dadurch gekennzeichnet, dass die radiale Gestaltsänderung eine Reihe von Einprägungen (12) umfasst, die gegenüber der Bohrung des zylindrischen Teils des Außenrings nach innen vorspringen.

5. Lager nach Anspruch 2 oder 3, dadurch gekennzeichnet, dass die radiale Gestaltsänderung eine ringförmige Rippe (14) umfasst, die gegenüber der Bohrung des zylindrischen Teils des Außenrings nach innen vorspringt, um eine Verjüngung zu bilden.

6. Lager nach Anspruch 2 oder 3, dadurch gekennzeichnet, dass die radiale Gestaltsänderung eine Reihe von Zungen (13) umfasst, die gegenüber der Bohrung des zylindrischen Teils des Außenrings nach innen vorspringen.

7. Lager nach Anspruch 2, dadurch gekennzeichnet, dass die radiale Gestaltsänderung eine ringförmige Nut (16) umfasst, die an der Bohrung des zylindrischen Teils des Außenrings vorgesehen ist.

8. Lager nach einem der vorhergehenden Ansprüche, dadurch gekennzeichnet, dass die Sicherungsscheibe einen zylindrischen Abschnitt aufweist, der bezogen auf die Radialrichtung zwischen dem nachgiebigen Teil und Sicherungsmitteln für den Außenring angeordnet ist, dass der zylindrische Teil an seinem freien Ende durch einen radialen Kragen (11d) verlängert ist, der nach außen gerichtet ist und dazu eingerichtet ist mit den axialen Sicherungsmitteln zusammen zu wirken.

9. Lager nach einem der Ansprüche 1 bis 7, dadurch gekennzeichnet, dass die Sicherungsscheibe in der Nähe ihres Randes im Wesentlichen radial ausgerichtet ist.

10. Lager nach einem der vorhergehenden Ansprüche, dadurch gekennzeichnet, dass der Rand der Sicherungsscheibe in Zungen (13) aufgeschnitten ist.

11. Lager nach einem der vorhergehenden Ansprüche, dadurch gekennzeichnet, dass eine axial elastische Scheibe (22) in axialer Richtung zwischen dem Ausgleichsring (9) und der Sicherungsscheibe (11) eingefügt ist, um eine axiale Vorspannung auf den Ausgleichsring auszuüben.

12. Lager nach einem der Ansprüche 1 bis 10, dadurch gekennzeichnet, dass die Sicherungsscheibe (11) mit den axial elastischen Mitteln derart kombiniert ist, dass sie selbst eine axiale Vorspannung auf den Ausgleichsring (9) ausübt.

13. Lager nach Anspruch 2, dadurch gekennzeichnet, dass die Sicherungsscheibe (11) einen radialen Bereich (11a) aufweist, in dem federnde Zungen (23) vorgesehen sind, die in Richtung auf den Ausgleichsring aus dem radialen Bereich axial vorspringen.

14. Lager nach Anspruch 13, dadurch gekennzeichnet, dass die federnden Zungen (23) in Umfangsrichtung ausgerichtet sind.

## Claims

1. Rolling bearing (1), especially for a motor vehicle steering column, of the type comprising an outer ring (4) equipped with a raceway, an inner ring (6) equipped with a raceway, a row of rolling elements (8) arranged between the raceways of said rings, an allowance ring (9) providing the connection between the inner ring and the steering column shaft and capable of transmitting axial loads to the inner ring , and a locking washer (11) for locking the bearing axially on the shaft, characterized in that the outer ring comprises a means of axially retaining the locking washer.

2. Bearing according to claim 1, characterized in that the outer ring comprises a cylindrical portion surrounding the allowance ring and the locking washer, and provided with a radial deformation, said radial deformation being capable of cooperating with the periphery of the locking washer.

3. Bearing according to claim 2, characterized in that the radial deformation is arranged at the free end of the outer ring.

4. Bearing according to claim 2 or 3, characterized in that the radial deformation comprises a number of bosses (12) projecting inward with respect to the bore of the cylindrical portion of the outer ring.

5. Bearing according to claim 2 or 3, characterized in that the radial deformation comprises an annular bulge (14) projecting inward with respect to the bore of the cylindrical portion of the outer ring, to form a narrowing.

6. Bearing according to claim 2 or 3, characterized in that the radial deformation comprises a number of tabs (13) projecting inward with respect to the bore of the cylindrical portion of the outer ring.

7. Bearing according to claim 2, characterized in that the radial deformation comprises an annular slot (16) provided on the bore of the cylindrical portion of the outer ring.

8. Bearing according to any one of the preceding claims, characterized in that the locking washer comprises a cylindrical portion arranged radially between the elastic member and the retaining means of the outer ring, said cylindrical portion being extended at its free end by a radial flange (11d) that faces outward and is capable of cooperating with said axial-retention means.

9. Bearing according to any one of claims 1 to 7, characterized in that the locking washer is substantially radial near its periphery.

10. Bearing according to any one of the preceding claims, characterized in that the periphery of the locking washer is cut into tabs (13).

11. Bearing according to any one of the preceding claims, characterized in that an axially elastic washer (22) is inserted axially between the allowance ring (9) and the locking washer (11) to exert axial preload on the allowance ring.

12. Bearing according to any one of claims 1 to 10, characterized in that the locking washer (11) is shaped with means that have axial elasticity so that it itself exerts an axial preload on the allowance ring (9).

13. Bearing according to claim 12, characterized in that the locking washer (11) comprises a radial portion (11a) in which there are flexible elastic tabs (23) projecting axially from said radial portion toward the allowance ring.

14. Bearing according to claim 13, characterized in that the elastic tabs (23) are oriented in the circumferential direction.
